# FASCICULE DE BREVET EUROPEEN

(11) **EP 3 132 490 B1**
(45) Date de publication et mention de la délivrance du brevet: **07.06.2023**
(21) Numéro de dépôt: 15779476.9
(22) Date de dépôt: 14.04.2015
(51) Int. Cl.: H01M 10/44, H01M 10/052, H01M 4/134, H01M 4/58, H01M 4/04, H01M 4/136, H02J 7/00

(54) **PROCÉDÉ DE CHARGE / DÉCHARGE ÉLECTROCHIMIQUE D'UNE BATTERIE LITHIUM-SOUFRE (LI-S) ET DISPOSITIF DE MISE EN OEUVRE DUDIT PROCÉDÉ**
VERFAHREN ZUM ELEKTROCHEMISCHEN AUFLADEN/ENTLADEN VON LITHIUM-SCHWEFEL-BATTERIEN UND VORRICHTUNG MIT VERWENDUNG DES BESAGTEN VERFAHRENS
METHOD FOR THE ELECTROCHEMICAL CHARGING/DISCHARGING OF A LITHIUM-SULPHUR (LI-S) BATTERY AND DEVICE USING SAID METHOD

(30) Priorité: 15.04.2014 US 201461979823 P
(43) Date de publication de la demande: 22.02.2017
(73) Titulaire: Hydro-Québec, Montréal, QC H2Z 1A4 (CA)
(72) Inventeur: ZAGHIB, Karim, Longueuil, Québec J4M 2M7 (CA); KIM, Chisu, Longueuil, Québec J4K 0B2 (CA); GUERFI, Abdelbast, Brossard, Québec J4X 1W2 (CA); CHO, Myunghun, St-Lambert, Québec J4P 2H5 (CA)
(74) Mandataire: Lang, Johannes
(86) Numéro de dépôt international: PCT/CA2015/050306
(87) Numéro de publication internationale: WO 2015/157859

(56) Documents cités:
- EP-A1- 1 248 309
- EP-A1- 2 127 003
- US-A- 5 291 116
- US-A1- 2006 238 203
- US-A1- 2006 238 203
- US-A1- 2013 193 904
- US-A1- 2014 084 846
- US-B1- 6 307 353
- US-B1- 6 376 123
- CUI ET AL.: 'Rechargeable Batteries with High Energy Storage Activated by In-situ Induced Fluorination of Carbon Nanotube Cathode' SCIENTIFIC REPORTS 4 2014, XP055230546
- YAO ET AL.: 'Improving lithium-sulphur batteries through spatial control of sulphur species deposition on a hybrid electrode surface' NATURE COMMUNICATIONS vol. 5, no. 3943, 27 Mai 2014, XP055230549

## Description

### DOMAINE TECHNIQUE

La présente invention concerne généralement les cellules électrochimiques et batteries dans lesquelles la cathode comprend un matériau contenant du soufre et l'anode comprend un matériau contenant du lithium (batterie Li-S). Plus spécifiquement, l'invention concerne un procédé de charge / décharge d'une batterie Li-S défini selon les revendications annexées. De plus, l'invention concerne un procédé de fabrication d'une batterie Li-S incorporant le procédé de charge / décharge selon l'invention.

### ÉTAT DE LA TECHNIQUE

Les batteries ayant une densité énergétique élevée telles que les batteries Li-S sont de plus en plus en demande, étant donné le développement croissant d'appareils électroniques portables. Les réactions électrochimiques qui se produisent dans les batteries Li-S sont basées sur les réactions de conversion accompagnant les changements de phase entre les phases solides et les intermédiaires solubles. Contrairement aux batteries conventionnelles qui elles sont basées sur les réactions d'intercalation à l'intérieur de milieux solides bien définis, les électrodes cathodes dans les batteries Li-S sont soumises à d'importants changements morphologiques et volumétriques. Ceci représente l'une des difficultés fondamentales lorsqu'on veut obtenir une durée de vie élevée dans une batterie Li-S. Le mécanisme réactionnel simplifié dans une batterie Li-S est le suivant :

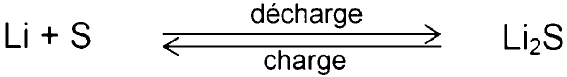

Les réactions à chaque étape dans une batterie Li-S sont les suivantes :
(I) S₈(*solide*) + 2Li⁺ + 2e⁻ → Li₂S₈(*soluble*) ; 0.25 électron/S (209 mAh/g)
(II) Li₂S₈(*soluble*) + 2Li⁺ + 2e- → 2Li₂S₄ (*soluble*) ; 0.25 électron/S (209 mAh/g)
(III) Li₂S₄ (*soluble*) + 2Li⁺ + 2e⁻ → 2Li₂S₂(*solide*) ; 0.5 électron/S (418 mAh/g)
(IV) Li₂S₂(*solide*) + 2Li⁺ + 2e⁻ → 2Li₂S (*solide*) ; 1 électron/S (836 mAh/g)

Les produits solides dans les réactions ci-dessus présentent une résistivité élevée tant sur le plan de la conductivité des électrons que sur le plan de la conductivité lithium-ion. Par conséquent, le contrôle de la morphologie de ces produits solides est un facteur crucial dans la détermination de la réversibilité d'une batterie Li-S (Jianming Zheng et al., Controlled Nucleation and Growth Process of Li2S2/Li2S in Lithium-Sulfur Batteries, Journal of Electrochemical Society 2013, 160(11), A1992-A1996). Plusieurs stratégies de contrôle ont été développées.

Une des stratégies développées pour le contrôle de la morphologie des produits solides dans une batterie Li-S est de confiner le soufre actif à l'intérieur d'une matrice conductrice (généralement un matériau contenant du carbone) telle que du carbone mésoporeux (X. Ji, L.F. Nazar, J. Mat. Chem. 20 (2010) 9821-9826), du carbone sous forme de sphère creuse (N. Jayaprakash, J. Shen, S.S. Moganty, A. Corona, L. A. Archer, Angew. Chem. 123 (2011) 6026-6030), du carbone sous forme de nanotubes (CNTs) (G. Zheng, Q. Zhang, J.J. Cha, Y. Yang, W. Li, Z.W. Seh, Y. Cui, Nano Lett. (2013) 13, 1265-1270) ou des couches de graphène (L. Ji, M. Rao, H. Zheng, L. Zhang, Y. Li, W. Duan, J. Guo, E.J. Cairns, Y. Zhang, J. Am. Chem. Soc. 133 (2011) 18522-18525).

Les différentes approches sous cette stratégie de confinement du soufre actif à l'intérieur d'une matrice conductrice se sont avérées assez effectives confirmant l'aspect prometteur des batteries à haute énergie Li-S. Cependant, plusieurs problèmes demeurent. Premièrement, le confinement du soufre n'est pas toujours parfait ni permanent. Après un certain nombre de cycles, les sulfures solubles diffusent à l'extérieur de la matrice et se retrouvent dans l'électrolyte. Deuxièmement, la densité du carbone composite étant très faible, la densité énergétique volumétrique de la cellule est sacrifiée et n'est pas meilleure que celle dans une batterie conventionnelle Li-ion. Troisièmement, la méthode de synthèse n'est pas viable économiquement lorsqu'on augmente la production, ce qui rend la commercialisation difficile.

D'autres stratégies de contrôle de la morphologie des produits solides dans une batterie Li-S reposent sur la nature de l'électrolyte utilisée dans la cellule. De telles approches sont divulguées par exemple dans les documents U.S. 7,019,494, U.S. 7,646,171, U.S. 2006-0208701 et U.S. 2005-0156575.

De plus, des tentatives de contrôle de la morphologie des produits solides dans une batterie Li-S basées sur la méthode de charge et/ou décharge de la batterie ont été faites. De tels procédés sont divulgués par exemple dans les documents Yu-Sheng Su et al., A Strategic Approach to Recharging Lithium-Sulphur Batteries for Long Cycle Life, Nature Communications, published December 18, 2013; U.S. 8,647,769.
US 2006/0238203 décrit un dispositif et un procédé permettant d'évaluer avec précision l'état de la charge et l'âge relative d'une batterie Li-S. Le procédé utilise des impulsions obtenues par des variations de tension. US 6,376,123 décrit un procédé de fabrication de batterie Li-S ayant un électrolyte solide. Le procédé comprend une étape de formation. US 2013/0193904 décrit un dispositif et un procédé permettant la gestion de la transformation incluant la charge d'un grand nombre de batteries incluant les batteries Li-S. Le procédé utilise des impulsions.

Il demeure désirable de mettre au point des stratégies permettant l'amélioration de la performance et des propriétés des batteries Li-S.

### RÉSUMÉ DE L'INVENTION

Les inventeurs de la présente invention ont développé un procédé de charge / décharge permettant le contrôle de la morphologie du matériau actif dans une batterie Li-S; la capacité et la durée de vie de la batterie sont donc améliorées. Le procédé selon l'invention est utilisé comme outil dans ce contrôle.

Plus spécifiquement, les inventeurs ont découvert que certaines variations dans le profil du courant utilisé lors du processus de charge / décharge permettent l'amélioration de la capacité et la durée de vie de la batterie.

Le procédé selon l'invention peut être mis en oeuvre dans un dispositif de charge utilisé pour la charge / décharge d'une batterie LiS. La présente invention se rapporte à un tel dispositif.

De plus, le procédé selon l'invention peut être incorporé dans un procédé de fabrication d'une batterie Li-S, en particulier à l'étape de formation et/ou vieillissement de la batterie. La présente invention se rapporte à un tel procédé de fabrication.

Par conséquent, l'invention se rapporte à un procédé de charge / décharge d'une batterie ou cellule Li-S, défini selon les revendications annexées. (8)

D'autres avantages pourront encore apparaître à la personne versée dans l'art à la lecture des exemples ci-dessous illustrés par les figures annexées, donnés à titre illustratif et non limitatif.

### BRÈVE DESCRIPTION DES FIGURES

La Figure 1 illustre la décharge d'une batterie de l'Exemple 2 *versus* une batterie de l'Exemple Comparatif 1.
La Figure 2 illustre la décharge d'une batterie de l'Exemple 3 *versus* une batterie de l'Exemple Comparatif 1.
La Figure 3 illustre la décharge d'une batterie de l'Exemple 4 *versus* une batterie de l'Exemple Comparatif 1.
La Figure 4 illustre la décharge d'une batterie de l'Exemple 5 *versus* une batterie de l'Exemple Comparatif 1.
La Figure 5 illustre la décharge d'une batterie de l'Exemple 6 *versus* une batterie de l'Exemple Comparatif 1.
La Figure 6a illustre la décharge d'une batterie de l'Exemple 8 (Exemple Comparatif 2).
La Figure 6b illustre la décharge d'une batterie de l'Exemple 9 *versus* une batterie de l'Exemple Comparatif 2.

### DESCRIPTION DE MODES DE RÉALISATIONS DE L'INVENTION

Tel qu'utilisé dans la présente demande, le terme « courant pulsé » se réfère à une application du courant pendant une période de temps limitée, suivie d'une inversion du courant pendant une période de temps limitée ou d'une période de pause limitée.

Tel qu'utilisé dans la présente demande, le terme « courant constant » se réfère à une application du courant contrôlée par un voltage limité ou une accumulation d'énergie, sans limite sur le temps de chevauchement.

Tel qu'utilisé dans la présente demande, le terme « courant hybride » se réfère à l'utilisation d'une combinaison de courant pulsé et courant constant pendant la même étape de charge ou décharge.

Tel qu'utilisé dans la présente demande, le terme « charge » se réfère aux réactions électrochimiques au cours desquelles l'électrode positive est oxydée et l'électrode négative est réduite, générant un flux de courant de l'électrode positive vers l'électrode négative (courant positif).

Tel qu'utilisé dans la présente demande, le terme « décharge » se réfère aux réactions électrochimiques au cours desquelles l'électrode positive est réduite et l'électrode négative est oxydée, générant un flux de courant de l'électrode négative vers l'électrode positive (courant négatif).

Tel qu'utilisé dans la présente demande, le terme « charge / décharge » se réfère à la charge et/ou décharge d'une batterie.

Tel qu'utilisé dans la présente demande, le terme « dispositif de charge » se réfère à un dispositif électronique qui génère un courant pour la charge d'une batterie.

Les inventeurs ont découvert un procédé de charge / décharge qui permet le contrôle de la morphologie du matériau actif dans une batterie Li-S. Le procédé selon l'invention permet une amélioration de la capacité et la durée de vie de la batterie. Le procédé est utilisé comme instrument de contrôle de la morphologie du matériau actif dans une batterie Li-S. Plus spécifiquement, les inventeurs ont découvert que des variations dans le profil de courant lors du processus de charge / décharge d'une batterie Li-S permet une amélioration de la capacité et la durée de vie de la batterie.

En effet, étant donné que le courant représente la vitesse de réaction (oxydation ou réduction) dans les cellules électrochimiques, la cinétique des réactions peut être directement contrôlée par une programmation du profil du courant.

Dans les batteries au lithium rechargeables conventionnelles, un courant constant est généralement appliqué pour charger la batterie, de telle sorte que les réactions se produisent à une vitesse constante. La présente invention propose un procédé utilisant un courant pulsé. Ce procédé facilite l'utilisation du soufre actif dans une batterie Li-S. Le courant pulsé procure relaxation et rééquilibrage au fur et à mesure que les réactions se produisent dans la batterie Li-S, et la morphologie des produits solides formés (S₈, Li₂S₂, Li₂S) est moins résistive. En effet, la relaxation ou le rééquilibrage permet une augmentation du temps d'interaction entre les produits solides et les espèces solubles dans l'électrolyte.

La présente invention présente un autre avantage en ce que le temps de charge peut être réduit en combinant différentes amplitudes de pulsation dépendamment des régions de l'état de la charge (« state of charging » (SOC)). Généralement, il est nécessaire de limiter la vitesse de charge afin de prévenir des réactions irréversibles indésirables qui se produisent sous des conditions de courant élevé. L'application d'un courant pulsé permet une limite de courant de charge plus tolérable.

Selon un mode de réalisation avantageux de l'invention, le procédé peut s'appliquer à tout type de batterie utilisant un matériau de cathode contenant du soufre. Selon un autre mode de réalisation avantageux de l'invention, le soufre peut être du soufre élémentaire, un organo-soufre, des compositions carbone-soufre ou toute autre composition de nature similaire.

Selon un mode de réalisation avantageux de l'invention, le procédé peut également s'appliquer aux cellules ayant des cathodes à charge élevée (> 1 mg_soufre/cm²) et/ou un électrolyte visqueux (> 10 mPa·s).

Le procédé selon l'invention peut être mise en oeuvre dans un dispositif de charge utilisé pour la charge / décharge d'une batterie LiS. L'invention se rapporte à de tels dispositifs.

De plus, le procédé selon l'invention peut être incorporé dans un procédé de fabrication de batterie Li-S. En particulier, le procédé selon l'invention peut être incorporé dans l'étape de formation et/ou de vieillissement.

### EXEMPLES

Procédés de charge/décharge sont illustrés par les exemples ci-dessous.

### Exemple 1 : (Exemple Comparatif 1)

### a) Préparation d'un film électrode positif

Le poly(éthylène oxyde) homo polymère (PEO) (MM : 5.000.000) est dissout dans un mélange acétonitrile et toluène (rapport volumique : 8:2), à une concentration en poids moléculaire de 10%. De la poudre de soufre (3g), du Ketjen black (1g), la solution de PEO (4,49g) sont mélangés en utilisant un mélangeur centrifuge planétaire (Thinky Mixer ARE-250) afin d'obtenir une suspension. On ajoute à la suspension du solvant additionnel (acétonitrile + toluène, rapport volumique 8:2) afin d'atteindre une viscosité appropriée pour le revêtement, soit environ 10.000 cP. La suspension ainsi obtenue est utilisée pour former un revêtement sur une feuille d'aluminium recouverte de carbone. La formation du revêtement est effectuée à l'aide d'un « doctor blade » présentant un écart de 200 µm. Après évaporation du solvant, le poids de chargement du soufre est autour de 2 mg/cm².

### b) Assemblage de la cellule

Des cellules CR2032 de la taille d'une pièce de monnaie sont assemblées à l'intérieur d'une boîte à gant remplie de gaz hélium en utilisant un séparateur Celgard 3501 et une feuille de lithium (Hoshen, 200 µm) comme anode. Puis, on injecte dans la cellule, 0,12 ml d'une solution de bis(trifluorométhanesulfonyl)imide de lithium (LiTFSI) 1M dans un mélange éther éthylène glycol-diméthyl (DME) et 1,3-dioxolane (DOX) (rapport volumique : 1:1), formant une électrolyte liquide.

### c) Formation

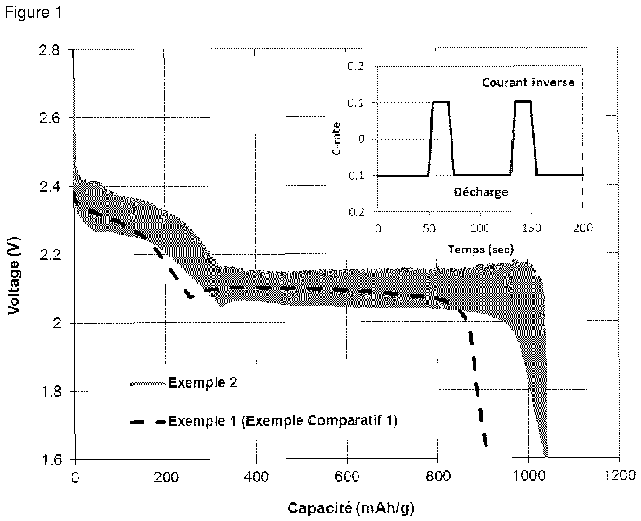

La cellule ainsi constituée est stockée à 25°C pendant 12 heures et soumise au processus de charge / décharge en utilisant un courant constant de 0,1C, 3 fois, entre 1,6V et 2,8V à 25°C. La capacité de décharge de la batterie de l'Exemple Comparatif 1 est illustrée aux Figures 1-5. La capacité obtenue pour l'Exemple Comparatif 1 est 909 mAh.

### Exemple 2

Lors de l'étape de formation (c'est-à-dire, pour la charge et la décharge), au lieu d'un courant continu, on applique un courant pulsé qui consiste en ce que : le courant 0,1C est appliqué pendant 60 secondes suivi d'une inversion du sens du courant pendant 20 secondes, tel qu'illustré à la figure 1. L'application de ce courant pulsé est répétée jusqu'à atteindre les tensions de coupure. Les autres conditions sont les mêmes qu'à l'Exemple 1. La capacité de décharge de la batterie à l'Exemple 2 est illustrée à la Figure 1 en comparaison à l'Exemple Comparatif 1. La capacité atteinte à l'Exemple 2 est 1034 mAh, ce qui est 14% plus élevé que la capacité obtenue à l'Exemple Comparatif 1.

### Exemple 3

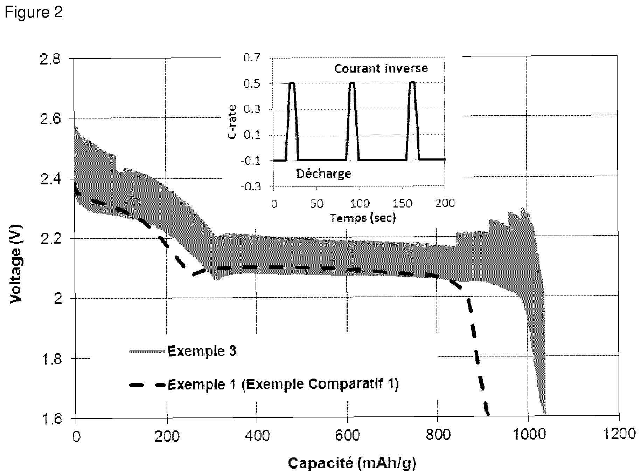

Lors de l'étape de formation (c'est-à-dire, pour la charge et la décharge), au lieu d'un courant continu, on applique un courant pulsé qui consiste en ce que : le courant 0,1C est appliqué pendant 60 secondes suivi du courant 0,5C en sens inverse pendant 4 secondes, tel qu'illustré à la figure 2. L'application de ce courant pulsé est répétée jusqu'à atteindre les tensions de coupure. Les autres conditions sont les mêmes qu'à l'Exemple 1. La capacité de décharge de la batterie à l'Exemple 3 est illustrée à la Figure 2 en comparaison à l'Exemple Comparatif 1. La capacité atteinte à l'Exemple 3 est 1036 mAh, ce qui est 14% plus élevé que la capacité obtenue à l'Exemple Comparatif 1.

### Exemple 4

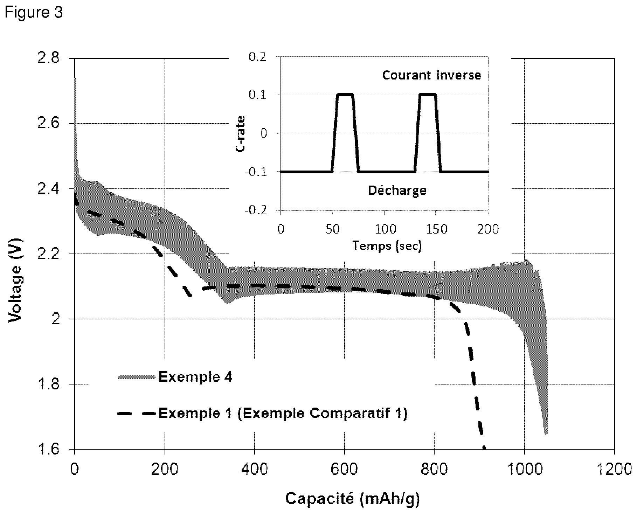

On applique un courant pulsé, à savoir, le courant 0,1C pendant 60 secondes suivi du courant 0,5C en sens inverse pendant 4 secondes, seulement pour les étapes de décharge; et on applique un courant constant aux étapes de charge. Les autres conditions sont les mêmes qu'à l'Exemple 1. La capacité de décharge de la batterie à l'Exemple 4 est illustrée à la Figure 3 en comparaison à l'Exemple Comparatif 1. La capacité atteinte à l'Exemple 4 est 1048 mAh, ce qui est 15% plus élevé que la capacité obtenue à l'Exemple Comparatif 1.

### Exemple 5

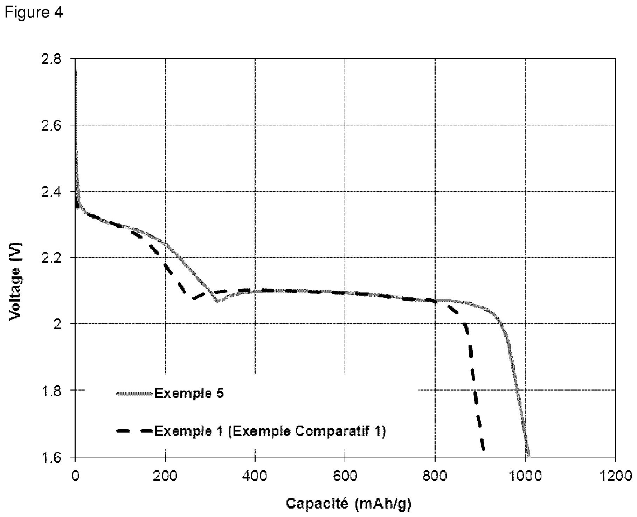

On applique un courant pulsé, à savoir, le courant 0,1C pendant 60 secondes suivi du courant 0,1C en sens inverse pendant 20 secondes, seulement aux étapes de charge; et on applique un courant constant aux étapes de décharge. Les autres conditions sont les mêmes qu'à l'Exemple 1. La capacité de décharge de la batterie à l'Exemple 5 est illustrée à la Figure 4 en comparaison à l'Exemple Comparatif 1. La capacité atteinte à l'Exemple 5 est 1008 mAh, ce qui est 11% plus élevé que la capacité obtenue à l'Exemple Comparatif 1.

### Exemple 6

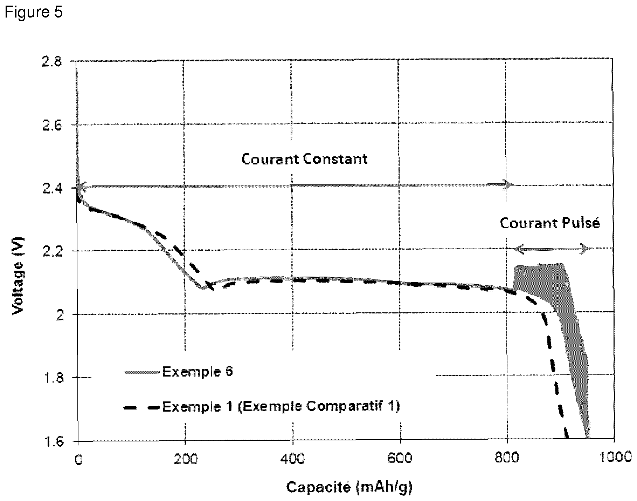

On applique un courant pulsé pendant seulement 30% des étapes de décharge. Donc pour cet exemple, on applique une combinaison de courant pulsé et courant constant, c'est-à-dire, un « courant hybride ». Les autres conditions sont les mêmes qu'à l'Exemple 4. La capacité de décharge de la batterie à l'Exemple 6 est illustrée à la Figure 5 en comparaison à l'Exemple Comparatif 1. La capacité atteinte à l'Exemple 6 est 951 mAh, ce qui est 5% plus élevé que la capacité obtenue à l'Exemple Comparatif 1.

### Exemple 7 (Exemple Comparatif 2)

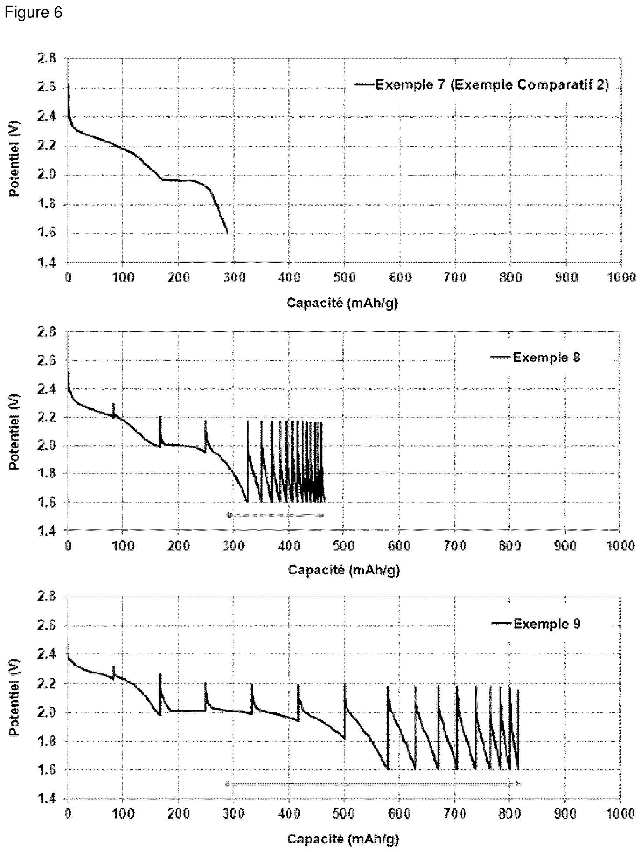

On injecte dans une cellule, du bis(trifluorométhanesulfonyl)imide de lithium (LiTFSI) 0,5M dans un mélange de N-propyl-N-méthylpyrrolidinium bis(trifluorométhanesulfonyl)imide (PY13TFSI), DME et DOX (rapport volumique : 2:1:1), formant un électrolyte liquide. Les autres conditions sont les mêmes qu'à l'Exemple 1. La capacité atteinte à l'Exemple 7 (Exemple Comparatif 2) est illustrée à la Figure 6a. La capacité obtenue à l'Exemple Comparatif 2 est 288 mAh.

### Exemple 8

Lors de l'étape de formation, au lieu d'un courant continu, on applique un courant pulsé qui consiste en ce que : le courant 0,1C est appliqué pendant 1 heure suivi d'une pause pendant 2 heures. L'application de ce courant pulsé et suivi d'une pause est répétée jusqu'à atteindre les tensions de coupure. Les autres conditions sont les mêmes qu'à l'Exemple 7. La capacité de décharge de la batterie à l'Exemple 8 est illustrée à la Figure 6b en comparaison à l'Exemple 7 (Exemple Comparatif 2). La capacité atteinte à l'Exemple 8 est 458 mAh, ainsi la capacité est 59% plus élevée que la capacité obtenue à l'Exemple Comparatif 2.

### Exemple 9

Lors de l'étape de formation, au lieu d'un courant continu, on applique un courant pulsé qui consiste en ce que : le courant 0,1C est appliqué pendant 6 heures suivi d'une pause pendant 6 heures. L'application de ce courant pulsé et suivi d'une pause est répétée jusqu'à atteindre les tensions de coupure. Les autres conditions sont les mêmes qu'à l'Exemple 7. La capacité de décharge de la batterie à l'Exemple 9 est illustrée à la Figure 6c en comparaison à l'Exemple 7 (Exemple Comparatif 2). La capacité atteinte à l'Exemple 9 est 816 mAh, ainsi la capacité est 183% plus élevée que la capacité obtenue à l'Exemple Comparatif 2.

**La Table 1 ci-dessous fournit un résumé des conditions dans les Exemples 1-9.**

| | **Électrolyte** | **Décharge** | **Charge** | **Capacité** |
|---|---|---|---|---|
| Exemple 1 (Exemple Comparatif 1) | liquide | courant constant | courant constant | 909 mAh |
| Exemple 2 | liquide | courant pulsé (-0.1C*60sec, +0.1C*20sec) | courant pulsé (+0.1C*60sec, - 0.1C*20sec) | 1034 mAh |
| Exemple 3 | liquide | courant pulsé (-0.1C*60sec, +0.5C*4sec) | courant pulsé (+0.1C*60sec, - 0.5C*4sec) | 1036 mAh |
| Exemple 4 | liquide | courant pulsé (-0.1C*60sec, +0.1C*20sec) | courant constant | 1048 mAh |
| Exemple 5 | liquide | courant constant | courant pulsé (+0.1C*60sec, - 0.1C*20sec) | 1008 mAh |
| Exemple 6 | liquide | courant hybride | courant constant | 951 mAh |
| Exemple 7 (Exemple Comparatif 2) | liquide ionique | courant constant | courant constant | 288 mAh |
| Exemple 8 | liquide ionique | pause | pause | 458 mAh |
| | | 2 heures | 2 heures | |
| Exemple 9 | liquide ionique | pause | pause | 816 mAh |
| | | 6 heures | 6 heures | |

Selon un mode de réalisation avantageux de l'invention, l'électrolyte dans la cellule est sous forme liquide tel que décrit dans les exemples ci-dessus. L'électrolyte peut également être sous forme liquide ionique, tel qu'aux exemples 7-9. La personne versée dans l'art comprendra que d'autres types d'électrolyte peuvent également être utilisés.

Selon un mode de réalisation avantageux de l'invention, il n'y a pas de limite pour l'amplitude de courant.

Les revendications ne doivent pas être limitées dans leur portée par les réalisations préférentielles illustrées dans les exemples, mais doivent recevoir l'interprétation la plus large qui soit conforme à la description dans son ensemble.

## Revendications

1. Procédé de charge/décharge d'une batterie ou cellule Li-S permettant une amélioration de la capacité et la durée de vie de la batterie ou cellule, le procédé comprenant l'utilisation d'un courant pulsé à l'étape de charge,
**caractérisé en ce que** le courant pulsé est obtenu par une application du courant pendant une période de temps limitée, suivie d'une inversion du courant pendant une période de temps limitée ou d'une période de pause limitée, et **en ce que** l'utilisation d'un courant pulsé est combinée à l'utilisation d'un courant constant,
et **caractérisé en ce que** la batterie ou cellule comporte un matériau actif de cathode à base de soufre et un électrolyte liquide non-aqueux ou liquide ionique.

2. Procédé de fabrication d'une batterie Li-S permettant une amélioration de la capacité et la durée de vie de la batterie ou cellule, le procédé comprenant une étape de formation et/ou de vieillissement utilisant un courant pulsé, selon le procédé de charge/décharge de la revendication 1,
**caractérisé en ce que** le courant pulsé est obtenu par une application du courant pendant une période de temps limitée, suivie d'une inversion du courant pendant une période de temps limitée ou d'une période de pause limitée, et **en ce que** l'utilisation d'un courant pulsé est combinée à l'utilisation d'un courant constant,
et **caractérisé en ce que** la batterie ou cellule comporte un matériau actif de cathode à base de soufre et un électrolyte liquide non-aqueux ou liquide ionique.

3. Procédé selon la revendication 1 ou 2, **caractérisé en ce que** le courant pulsé est obtenu par une application du courant constant pendant une première période qui dure entre 0,1 seconde et 10 heures, suivie d'une inversion du courant pendant une seconde période qui dure entre 0,1 seconde et 10 heures.

4. Procédé selon la revendication 1 ou 2, **caractérisé en ce que** le courant pulsé est obtenu par une application d'un courant constant pendant une première période qui dure entre 0,1 seconde et 10 heures, suivie d'une période de pause qui dure entre 0,1 seconde et 10 heures.

## Patentansprüche

1. Verfahren zum Laden/Entladen einer Li-S-Batterie oder -Zelle, um die Kapazität und die Lebensdauer der Batterie oder Zelle zu verbessern, wobei das Verfahren die Verwendung eines gepulsten Stroms im Ladeschritt umfasst,
**dadurch gekennzeichnet, dass** der gepulste Strom durch Anlegen eines Stroms für eine begrenzte Zeitperiode, gefolgt von einer Umkehrung des Stroms für eine begrenzte Zeitperiode oder eine begrenzte Pausenperiode erhalten wird,
und dadurch, dass die Verwendung eines gepulsten Stroms mit der Verwendung eines konstanten Stroms kombiniert wird,
und **dadurch gekennzeichnet, dass** die Batterie oder Zelle ein aktives Kathodenmaterial auf Schwefelbasis und einen flüssigen nichtwässrigen oder flüssigen ionischen Elektrolyten umfasst.

2. Verfahren zur Herstellung einer Li-S-Batterie, um die Kapazität und die Lebensdauer der Batterie oder Zelle zu verbessern,
wobei das Verfahren einen Schritt der Bildung und/oder der Alterung unter Verwendung eines gepulsten Stroms gemäß dem Verfahren zum Laden/Entladen nach Anspruch 1 umfasst,
**dadurch gekennzeichnet, dass** der gepulste Strom durch Anlegen des Stroms für eine begrenzte Zeitperiode, gefolgt von einer Umkehrung des Stroms für eine begrenzte Zeitperiode oder eine begrenzte Pausenperiode erhalten wird,
und dass die Verwendung eines gepulsten Stroms mit der Verwendung eines konstanten Stroms kombiniert wird,
und **dadurch gekennzeichnet, dass** die Batterie oder Zelle ein aktives Kathodenmaterial auf Schwefelbasis und einen flüssigen nichtwässrigen oder flüssigen ionischen Elektrolyten umfasst.

3. Verfahren nach Anspruch 1 oder 2,
**dadurch gekennzeichnet, dass** der gepulste Strom durch Anlegen des konstanten Stroms für eine erste Periode, die zwischen 0,1 Sekunden und 10 Stunden dauert, gefolgt von einer Umkehrung des Stroms für eine zweite Periode, die zwischen 0,1 Sekunden und 10 Stunden dauert, erhalten wird.

4. Verfahren nach Anspruch 1 oder 2,
**dadurch gekennzeichnet, dass** der gepulste Strom durch Anlegen eines konstanten Stroms für eine erste Periode, die zwischen 0,1 Sekunden und 10 Stunden dauert, gefolgt von einer Pausenperiode, die zwischen 0,1 Sekunden und 10 Stunden dauert, erhalten wird.

## Claims

1. A method of charging/discharging of a Li-S battery or cell to improve the capacity and the lifetime of the battery or cell,
the method comprising the use of a pulsed current in the charging step,
**characterized in that** the pulsed current is obtained by applying a current for a limited time period, followed by a reversal of the current for a limited time period or a limited pause period,
and **in that** the use of a pulsed current is combined with the use of a constant current, and **characterized in that** the battery or cell comprises a sulfur-based active cathode material and a liquid non-aqueous or liquid ionic electrolyte.

2. A method of manufacturing a Li-S battery to improve the capacity and the lifetime of the battery or cell,
the process comprising a step of forming and/or ageing using a pulsed current according to the method of charging/discharging of claim 1,
**characterized in that** the pulsed current is obtained by applying the current for a limited time period, followed by a reversal of the current for a limited time period or a limited pause period,
and **in that** the use of a pulsed current is combined with the use of a constant current, and **characterized in that** the battery or cell comprises a sulfur-based active cathode material and a liquid non-aqueous or liquid ionic electrolyte.

3. The method of claim 1 or 2,
**characterized in that** the pulsed current is obtained by applying the constant current for a first period lasting between 0.1 second and 10 hours, followed by a reversal of the current for a second period lasting between 0.1 second and 10 hours.

4. The method of claim 1 or 2,
**characterized in that** the pulsed current is obtained by applying a constant current for a first period lasting between 0.1 second and 10 hours, followed by a pause period lasting between 0.1 second and 10 hours.
